# EUROPEAN PATENT APPLICATION

(11) **EP 4 715 551 A1**
(43) Date of publication of application: **25.03.2026**
(21) Application number: 24810243.6
(22) Date of filing: 13.05.2024
(51) Int. Cl.: G06F 3/04842, G06F 3/0488

(54) **CHARACTER SELECTION CONTROL METHOD AND APPARATUS, ELECTRONIC DEVICE, AND READABLE STORAGE MEDIUM**

(30) Priority: 19.05.2023 CN 202310568297
(71) Applicant: Vivo Mobile Communication Co., Ltd., Dongguan, Guangdong 523863 (CN)
(72) Inventor: LI, Wanxing, Dongguan, Guangdong 523863 (CN)
(74) Representative: Murgitroyd & Company
(86) International application number: PCT/CN2024/092764
(87) International publication number: WO 2024/239996

(57) **Abstract**

This application discloses a character selection control method and apparatus, an electronic device, and a readable storage medium, and belongs to the information processing field. The character selection control method includes: receiving a first input; displaying a character selection area in response to the first input, where the character selection area is used to select at least one character; receiving a second input for adjusting a display position of a character selection control in the character selection area; and updating a character selection range of the character selection area in response to the second input.

## Description

This application claims priority to Chinese Patent Application No. 202310568297.0, filed with the China National Intellectual Property Administration on May 19, 2023 and entitled "CHARACTER SELECTION CONTROL METHOD AND APPARATUS, ELECTRONIC DEVICE, AND READABLE STORAGE MEDIUM", which is incorporated herein by reference in its entirety.

### TECHNICAL FIELD

This application belongs to the information processing field, and specifically relates to a character selection control method and apparatus, an electronic device, and a readable storage medium.

### BACKGROUND

Currently, when a user browses information by using an electronic device, a character needs to be selected in some scenarios. For example, when the user needs to copy or share a character in a page, the character needs to be selected first.

In the related technology, when a segment of characters needs to be copied, the user needs to first select the segment of characters and then copy the selected segment of characters. If the selected segment of characters includes a character that the user does not need to select, a character obtained through copy includes an unneeded character. As a result, flexibility of character selection is poor, and the character obtained through copy cannot meet an actual requirement of the user.

### SUMMARY

An objective of embodiments of this application is to provide a character selection control method and apparatus, an electronic device, and a readable storage medium, to conveniently and flexibly select a character that needs to be selected from a plurality of rows of characters, thereby improving efficiency of character selection.

According to a first aspect, an embodiment of this application provides a character selection control method, where the method includes: receiving a first input; displaying a character selection area in response to the first input, where the character selection area is used to select at least one character; receiving a second input for adjusting a display position of a character selection control in the character selection area; and updating a character selection range of the character selection area in response to the second input.

According to a second aspect, an embodiment of this application provides a character selection control apparatus, where the apparatus includes: a receiving module, a display module, and a processing module. The receiving module is configured to receive a first input. The display module is configured to display a character selection area in response to the first input received by the receiving module. The receiving module is further configured to receive a second input for adjusting a character selection control in the character selection area. The processing module is configured to update a character selection range of the character selection area in response to the second input received by the receiving module.

According to a third aspect, an embodiment of this application provides an electronic device. The electronic device includes a processor and a memory, the memory stores a program or instructions executable on the processor, and when the program or the instructions are executed by the processor, the steps of the method according to the first aspect are implemented.

According to a fourth aspect, an embodiment of this application provides a readable storage medium. The readable storage medium stores a program or instructions, and when the program or the instructions are executed by a processor, the steps of the method according to the first aspect are implemented.

According to a fifth aspect, an embodiment of this application provides a chip. The chip includes a processor and a communication interface, the communication interface is coupled to the processor, and the processor is configured to run a program or instructions to implement the method according to the first aspect.

According to a sixth aspect, an embodiment of this application provides a computer program product. The program product is stored in a storage medium, and the program product is executed by at least one processor to implement the method according to the first aspect.

In the embodiments of this application, the character selection control apparatus receives the first input; displays the character selection area, where the character selection area is used to select at least one character; receives the second input for the display position of the character selection control in the character selection area; and updates the character selection range of the character selection area. In this method, when the user needs to select specific character content in the character area, the user may first trigger display of the character selection area used to select a character, and then trigger, by moving the character selection control in the character selection area, the character selection control apparatus to update the character selection range of the character selection area, so that the user can conveniently and flexibly adjust, based on an actual character selection requirement, the character selected in the character selection area. In this way, a character that needs to be selected can be conveniently and flexibly selected from a plurality of rows of characters, to quickly obtain a character that meet a user requirement.

### BRIEF DESCRIPTION OF DRAWINGS

FIG. 1 is a schematic diagram of a method procedure of a character selection control method according to an embodiment of this application;
FIG. 2(A) is a schematic diagram of an example of an interface applied to a character selection control method according to an embodiment of this application;
FIG. 2(B) is a schematic diagram of another example of an interface applied to a character selection control method according to an embodiment of this application;
FIG. 3 is a schematic diagram of another example of an interface applied to a character selection control method according to an embodiment of this application;
FIG. 4(A) is a schematic diagram of another example of an interface applied to a character selection control method according to an embodiment of this application;
FIG. 4(B) is a schematic diagram of another example of an interface applied to a character selection control method according to an embodiment of this application;
FIG. 4(C) is a schematic diagram of another example of an interface applied to a character selection control method according to an embodiment of this application;
FIG. 4(D) is a schematic diagram of another example of an interface applied to a character selection control method according to an embodiment of this application;
FIG. 5(A) is a schematic diagram of another example of an interface applied to a character selection control method according to an embodiment of this application;
FIG. 5(B) is a schematic diagram of another example of an interface applied to a character selection control method according to an embodiment of this application;
FIG. 5(C) is a schematic diagram of another example of an interface applied to a character selection control method according to an embodiment of this application;
FIG. 6(A) is a schematic diagram of another example of an interface applied to a character selection control method according to an embodiment of this application;
FIG. 6(B) is a schematic diagram of another example of an interface applied to a character selection control method according to an embodiment of this application;
FIG. 6(C) is a schematic diagram of another example of an interface applied to a character selection control method according to an embodiment of this application;
FIG. 6(D) is a schematic diagram of another example of an interface applied to a character selection control method according to an embodiment of this application;
FIG. 7 is a schematic diagram of another example of an interface applied to a character selection control method according to an embodiment of this application;
FIG. 8(A) is a schematic diagram of another example of an interface applied to a character selection control method according to an embodiment of this application;
FIG. 8(B) is a schematic diagram of another example of an interface applied to a character selection control method according to an embodiment of this application;
FIG. 8(C) is a schematic diagram of another example of an interface applied to a character selection control method according to an embodiment of this application;
FIG. 8(D) is a schematic diagram of another example of an interface applied to a character selection control method according to an embodiment of this application;
FIG. 9(A) is a schematic diagram of another example of an interface applied to a character selection control method according to an embodiment of this application;
FIG. 9(B) is a schematic diagram of another example of an interface applied to a character selection control method according to an embodiment of this application;
FIG. 9(C) is a schematic diagram of another example of an interface applied to a character selection control method according to an embodiment of this application;
FIG. 10(A) is a schematic diagram of another example of an interface applied to a character selection control method according to an embodiment of this application;
FIG. 10(B) is a schematic diagram of another example of an interface applied to a character selection control method according to an embodiment of this application;
FIG. 11 is a schematic diagram of a structure of a character selection control apparatus according to an embodiment of this application;
FIG. 12 is a schematic diagram of a hardware structure of a character selection control apparatus according to an embodiment of this application; and
FIG. 13 is a schematic diagram of a hardware structure of an electronic device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

In the specification and claims of this application, the terms "first" and "second" are used to distinguish between similar objects, but are unnecessarily used to describe a specific sequence or order. It should be understood that, data used in this way may be interchangeable under appropriate circumstances, so that the embodiments of this application can be implemented in an order other than that illustrated or described herein. Moreover, the terms such as "first", "second", and the like typically distinguish between objects of one category rather than limiting a quantity of objects. For example, there may be one or more first objects. In addition, in the specification and claims, "and/or" represents at least one of the connected objects, and the character "/" usually represents an "or" relationship between associated objects.

With reference to the accompanying drawings, a character selection control method provided in the embodiments of this application are described in detail below by using specific embodiments and application scenarios thereof.

The character selection control method provided in the embodiments of this application may be applied to a scenario in which specific and consecutive characters are selected for copy.

In the related technology, when a user browses a web page, if the user needs to copy a segment of annotation-type characters in the web page, a start character in each row of characters in the segment of annotation-type characters includes "*", and the user needs to select a character other than "*", the user needs to select and copy the segment of annotation-type characters row by row, and rule out "*" in each row of characters when selecting each row of characters, or the user selects the entire segment of characters at one time, then pastes the entire segment of characters into a character document, deletes "*" in the pasted characters, and finally selects and copies characters obtained by deleting "*". As a result, when the user needs to copy a large quantity of character rows, the user needs to perform a plurality of selection and copy operations. Consequently, the entire operation process is complex and time-consuming.

According to the character selection control method provided in the embodiments of this application, if the user needs to copy a segment of annotation-type characters in a web page, after selecting the entire segment of characters, the user may move a character selection control in a character selection area to trigger update of a character selection range of the character selection area, that is, adjust a range of characters selected in the character selection area. For example, the user may move a character selection control in a lower left corner of the character selection area, to trigger an electronic device to adjust a start position of the character selection area to a position on the left of a character following "*" in each row of characters. In this way, the character selection range of the character selection area is reduced, so that another character other than "*" in each row of characters is selected at one time. In this way, the user may adjust the character selection range of the character selection area by moving the character selection control, so that a character that needs to be selected is conveniently selected from a plurality of rows of characters, thereby improving operation efficiency.

The character selection control method provided in the embodiments of this application may also be applied to a scenario in which specific and non-consecutive characters are selected for copy.

In the related technology, when the user browses a web page, if the user needs to copy a plurality of non-consecutive characters in a segment of characters in the web page, the user needs to select each part of characters, and for each time of selection, perform one copy operation on a selected character. As a result, the entire operation process is complex and time-consuming. According to the character selection control method provided in the embodiments of this application, if the user needs to copy a plurality of non-consecutive characters in a segment of characters in a web page, the user may first select the segment of characters, drag a character selection control above a character selection area to a position of a character that does not need to be selected, and trigger an electronic device to display a sub-character selection control on each of both sides of a character closest to the position. Then, the user may drag the sub-character selection control, so that the two sub-character selection controls are separately located on both sides of character content that does not need to be selected, thereby deselecting the character content that does not need to be selected, and selecting non-consecutive characters. In this way, the user may deselect a character that does not need to be selected in a segment of characters by moving the character selection control to a position corresponding to the character that does not need to be selected, to quickly select non-consecutive characters, thereby greatly improving operation efficiency.

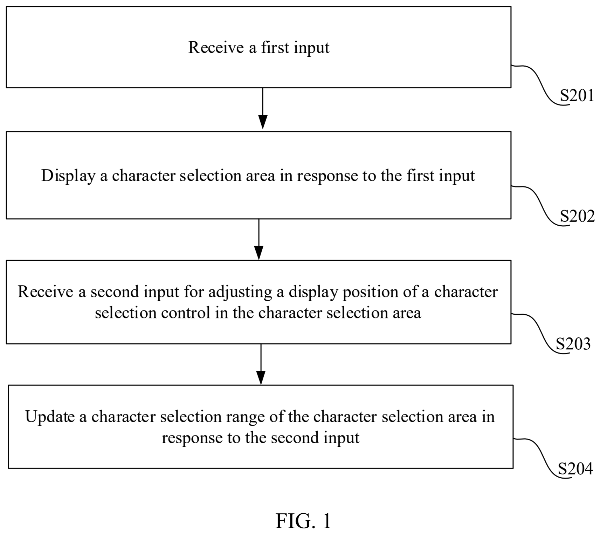

FIG. 1 is a schematic diagram of a method procedure of a character selection control method according to an embodiment of this application. As shown in FIG. 1, the character selection control method provided in this embodiment of this application may include the following steps S201 to S204:

Step S201: Receive a first input.

Optionally, in this embodiment of this application, the first input may be an input for a first character.

Optionally, in this embodiment of this application, the first character may be a character in a character display interface, for example, the first character may be a character in a character document interface or a character in a Notes interface or a Memo interface. Alternatively, the first character may be a character in another page such as a web page or a command window.

Optionally, in this embodiment of this application, the first character may be a sentence or a combination of a plurality of sentences. Optionally, the first character may be a sentence, a paragraph, or a chapter, or the first character may be in another form. This is not limited in this embodiment of this application.

Optionally, in this embodiment of this application, the first character may include characters such as a Chinese character, a digit, a letter, a punctuation mark, and an underscore. It should be noted that the first character may further include another type of character such as a space. This is not limited in this embodiment of this application.

Optionally, in this embodiment of this application, the first input may include any one of the following: a touch input, a voice input, a gesture input, or another feasible input such as a button input of a user. This is not limited in this embodiment of this application.

Further, the touch input may be a tap input, a sliding input, a press input, or the like of the user. Further, the tap operation may be any quantity of tap operations. The sliding operation may be a sliding operation in any direction, such as upward sliding, downward sliding, leftward sliding, or rightward sliding. This is not limited in this embodiment of this application.

For example, the first input may be a touch-and-hold and sliding input of the user for a character in a page, or the first input may be an input of dragging a selection control from a menu bar to an area in which a character is located. For example, the selection control may be a rectangular box or a circular box.

Step S202: Display a character selection area in response to the first input.

The character selection area is used to select at least one character.

Optionally, in this embodiment of this application, a character selection control apparatus may determine, based on an input parameter of the first input, the character selection area selected by the first input.

Optionally, in this embodiment of this application, the input parameter may include an input trajectory. Alternatively, the input parameter may include an input start position and an input end position. Alternatively, in a case that the first input is a touch input, the input parameter may include touch duration or touch pressure.

Optionally, in this embodiment of this application, the at least one character may be a character.

Optionally, in this embodiment of this application, a character in the character selection area is in a selected state or a selection state, that is, the character in the character selection area includes a character that the user needs to select.

Optionally, in this embodiment of this application, the character selection area may be a polygonal area.

For example, the character selection area may be a square area, a circular area, or an irregular polygonal area. This is not limited in this embodiment of this application.

Optionally, in this embodiment of this application, the character selection area may be outlined by using a solid line or a dashed line or displayed with preset transparency, or the character selection area is overlaid with a floating layer for display.

It should be noted that the character selection area is outlined or overlaid with a floating layer for display, so that the user can intuitively distinguish between a selected character and an unselected character.

Optionally, in this embodiment of this application, the character selection control apparatus may display at least one character selection control in the character selection area.

Optionally, a display position of the character selection control may be inside the area or on an area boundary of the character selection area. Optionally, the area boundary may be an area vertex.

Optionally, in this embodiment of this application, the character selection control may be a circular control, a square control, or a polygonal control. The character selection control may be solid or hollow. This is not limited in this embodiment of this application.

For example, the character selection control may be a control point.

Optionally, in this embodiment of this application, the character selection control apparatus may display the at least one character selection control on the area boundary or the area vertex of the character selection area.

For example, in a case that the character selection area is a rectangular area, the character selection control apparatus may display one character selection control at an area vertex of the rectangular area; or the character selection control apparatus may display one character selection control at a midpoint or another position of each of a left boundary, a right boundary, an upper boundary, and a lower boundary of the rectangular area.

In some embodiments of this application, the at least one character selection control may include a first character selection control, a second character selection control, a third character selection control, and a fourth character selection control.

Optionally, the first character selection control may be used to adjust a quantity of character rows selected in the character selection area and a start character in at least one row of characters selected therein. The second character selection control may be used to adjust a quantity of character rows selected in the character selection area and an end character in at least one row of characters selected therein. The third character selection control may be used to adjust an end character in the last row of characters selected in the character selection area. The fourth character selection control may be used to adjust a start character in the first row of characters selected in the character selection area.

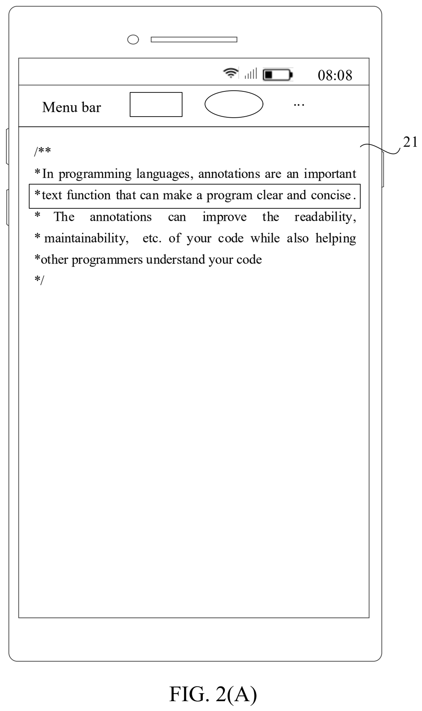

FIG. 2(A) is a schematic diagram of an example of an interface applied to a character selection control method according to an embodiment of this application. As shown in FIG. 2(A), that the first input is a touch input of the user for a character in a document interface of an electronic device. An interface 21 includes a segment of character content. The user touches and holds the initial character "*" in the third row of characters, and then slides rightward to the last character in the third row of characters. The electronic device determines a character selection area based on an input trajectory of the sliding input of the user, where characters in the character selection area are a selected state, and displays a control point 24a at a vertex in a lower left corner of the character selection area, displays a control point 24b at a vertex in an upper right corner of the character selection area, displays a control point 24c at a vertex in a lower right corner of the character selection area, and displays a control point 24d at a vertex in an upper left corner of the character selection area.

As shown in FIG. 2(A), the user may alternatively drag a rectangular control in a menu bar to a character area in which the second row of characters is located, and adjust a size of the rectangular control based on a character that needs to be selected. The electronic device determines, as a character selection area based on a user operation, a character area outlined by the rectangular control.

It should be noted that in the accompanying drawings of this application, a solid-line box is used to represent the character selection area. In practice, a dashed-line box may be used to represent the character selection area, or a floating layer is overlaid on the character selection area to reflect the character selection area.

It should be noted that the control point 24a is the first character selection control in this embodiment of this application, the control point 24b is the second character selection control in this embodiment of this application, the control point 24c is the third character selection control in this embodiment of this application, and the control point 24d is the fourth character selection control in this embodiment of this application. For ease of description, the first character selection control may be denoted as endRow, the second character selection control may be denoted as startRow, the third character selection control may be denoted as endCol, and the fourth character selection control may be denoted as startCol.

In some embodiments of this application, the at least one character selection control may include a fifth character selection control.

Optionally, in this embodiment of this application, the fifth character selection control may be used to deselect at least a part of characters in the character selection area.

In some embodiments of this application, the at least one character selection control may include the first character selection control, the second character selection control, the third character selection control, the fourth character selection control, and the fifth character selection control.

For ease of understanding, the fifth character selection control may be referred to as a deselection control point, and may be represented by using a letter S.

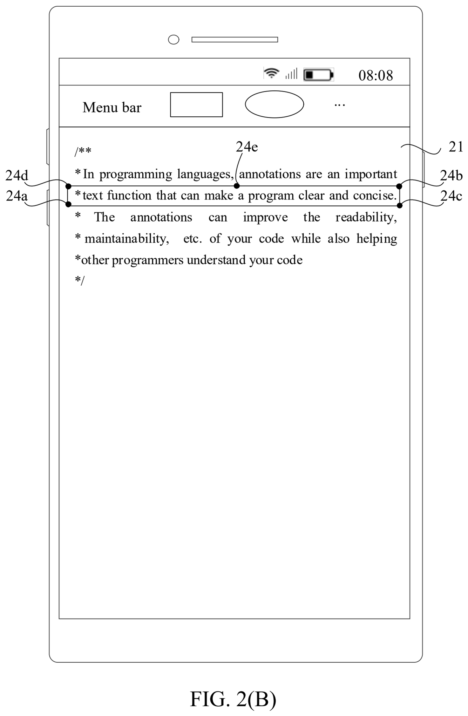

With reference to the foregoing FIG. 2(A), as shown in FIG. 2(B), the electronic device determines a character selection area based on the input trajectory of the sliding input of the user, displays a control point 24a at a vertex in a lower left corner of the character selection area, displays a control point 24b at a vertex in an upper right corner of the character selection area, displays a control point 24c at a vertex in a lower right corner of the character selection area, displays a control point 24d at a vertex in an upper left corner of the character selection area, and displays a control point 24e at a midpoint of an upper boundary of the character selection area.

It should be noted that the control point 24e is the fifth character selection control in this embodiment of this application.

It should be noted that the control points 24a, 24b, 24c, and 24d are one type of control points, and the control point 24e is another type of control point. To reflect a difference between the two types of control points, 24a, 24b, 24c, and 24d are filled differently from 24e in the figure.

Step S203: Receive a second input for adjusting a display position of a character selection control in the character selection area.

Optionally, in this embodiment of this application, the second input is used to trigger update of the display position of the character selection control.

Optionally, in this embodiment of this application, the second input may include any one of the following: a touch input, a voice input, a gesture input, or another feasible input such as a button input of the user. This is not limited in this embodiment of this application.

Further, the touch input may be a tap input, a sliding input, a press input, or the like of the user. Further, the tap operation may be any quantity of tap operations. The sliding operation may be a sliding operation in any direction, such as upward sliding, downward sliding, leftward sliding, or rightward sliding. This is not limited in this embodiment of this application.

For example, the second input is a drag input for the character selection control.

Step S204: Update a character selection range of the character selection area in response to the second input.

Optionally, in this embodiment of this application, the character selection control apparatus may adjust the character selection range of the character selection area based on the display position of the character selection control.

For example, the character selection control apparatus may update, based on the updated display position of the character selection control, a position of the area boundary of the character selection area and update the character selected in the character selection area, namely, the character selection range of the character selection area. For example, the character selection control apparatus may determine a target boundary position of the character selection area based on the updated position of the character selection control, and adjust a current boundary position of the character selection area to the target boundary position.

Optionally, in this embodiment of this application, the character selected in the character selection area may be all characters in the character selection area. Alternatively, the character selected in the character selection area may be a part of characters in the character selection area. For example, in a case that a part of characters in the character selection area are deselected by using the fifth character selection control, the character selected in the character selection area may be a character other than the deselected character in the character selection area.

It should be noted that, in a case that a part of or all characters in the character selection area are not deselected, all characters in the character selection area may be in a selection state or a selected state.

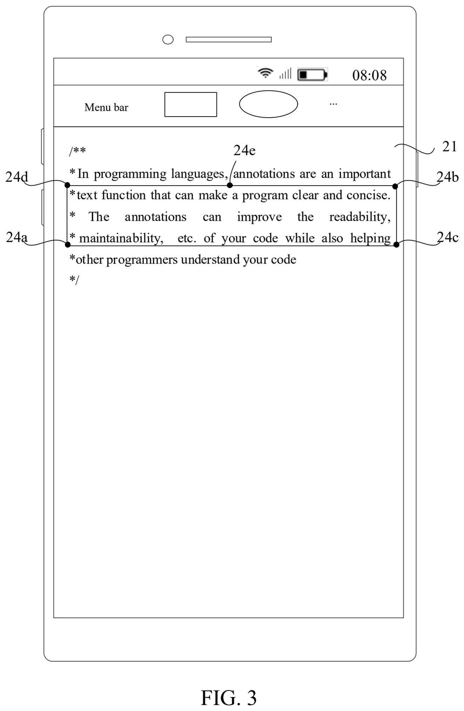

With reference to the foregoing FIG. 2(A), as shown in FIG. 3, after the user drags the control point 24a in the lower left corner of the character selection area downward, the character selection control apparatus selects two rows of characters following the selected one row of characters together based on a position to which the control point 24a is dragged, and the area boundary of the character selection area extends downward by widths of two rows of characters.

According to the character selection control method provided in this embodiment of this application, the character selection control apparatus receives the first input; displays the character selection area, where the character selection area is used to select at least one character; receives the second input for the display position of the character selection control in the character selection area; and updates the character selection range of the character selection area. In this method, when the user needs to select specific character content in the character area, the user may first trigger display of the character selection area used to select a character, and then trigger, by moving the character selection control in the character selection area, the character selection control apparatus to update the character selection range of the character selection area, so that the user can conveniently and flexibly adjust, based on an actual character selection requirement, the character selected in the character selection area. In this way, a character that needs to be selected can be conveniently and flexibly selected from a plurality of rows of characters, to quickly obtain a character that meet a user requirement.

Optionally, in this embodiment of this application, the character selection area includes N rows of characters, and in a case that the character selection control is the first character selection control, the process of updating the character selection range of the character selection area in step S204 may be replaced with the following step S204a1:

Step S204a1: In a case that the second input is an input for adjusting a display position of the first character selection control, update a quantity of character rows selected in the character selection area or update a start character in at least one row of characters selected in the character selection area.

The at least one row of characters is the N rows of characters, or the at least one row of characters includes characters other than the first row of characters in the N rows of characters, and N is an integer greater than 1.

In some embodiments of this application, the character selection control apparatus may update, based on the updated display position of the first character selection control, the quantity of character rows selected in the character selection area and the start character in the at least one row of characters other than the first row of characters in the N rows of characters selected in the character selection area.

Optionally, the character selection control apparatus may determine a target character in at least one row of characters in the N rows of characters based on the display position of the first character selection control, and use the target character in the at least one row of characters as a start character in the at least one row of characters selected in the character selection area.

For example, for one row of characters in the at least one row of characters, the target character may be one or more characters that are in the row of characters and that are located on the right of the display position of the first character selection control and have a smallest distance from the display position of the first control.

For example, in a case that the character selection area is determined, if a display position of the fourth character selection control changes, only a start character in each row of characters other than the initial row of characters selected in the character selection area is adjusted based on the display position of the first character selection control.

For example, in response to an input of moving the first character selection control leftward or rightward, the character selection control apparatus updates start characters in all selected character rows or a start character in a character row other than the initial row in all selected character rows.

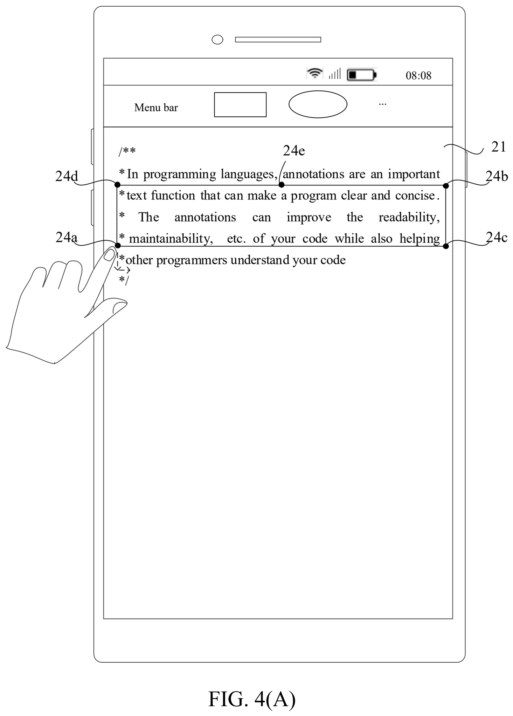

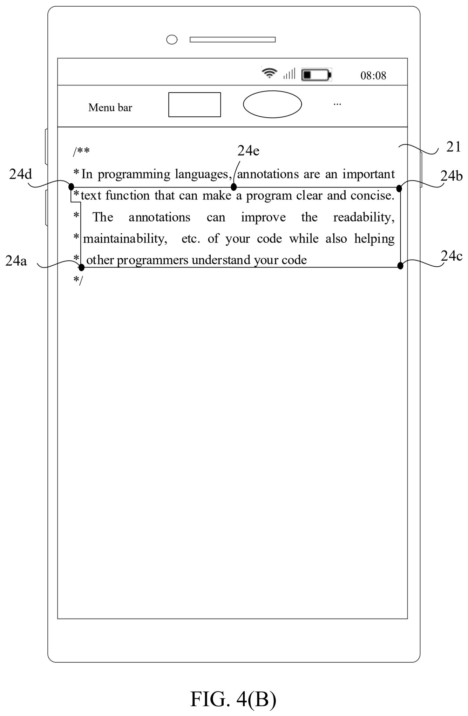

FIG. 4(A) is a schematic diagram of an example of an interface applied to a character selection control method according to an embodiment of this application. With reference to the foregoing FIG. 2(A) and FIG. 3, as shown in FIG. 4(A), if the user needs to select one more row of characters downward on a basis of currently selected characters, and remove "*" from another character other than the first row of characters in the currently selected characters, after the user drags the control point 24a downward by a distance of one character, the user may first touch and hold the control point 24d to fix a start character selected in the initial row, and then drag the control point 24a rightward by a distance of one character, so that the control point 24a is located below an area between "*" and a character adjacent to the right of "*". As shown in FIG. 4(B), the electronic device deselects "*" in a character row other than the first row of characters based on a position to which the control point 24a is dragged. In other words, a part of a left area boundary of the character selection area is moved rightward by a distance of one character.

It should be noted that in FIG. 4(A), a dashed line represents a trajectory of dragging the control point 24a. In practice, the dashed line is not displayed.

In some embodiments of this application, the character selection control apparatus may update, based on the updated display position of the first character selection control, the start characters in the N rows of characters selected in the character selection area.

For example, in a case that the character selection area is determined, if a display position of the fourth character selection control does not change, a start character in each row of characters selected in the character selection area is updated based on the display position of the first character selection control, that is, update the start characters in the N rows of characters.

It should be noted that the fourth character selection control is a character selection control displayed at the vertex in the upper left corner of the character selection area. For related descriptions of the fourth character selection control, refer to the foregoing descriptions. Details are not described herein again.

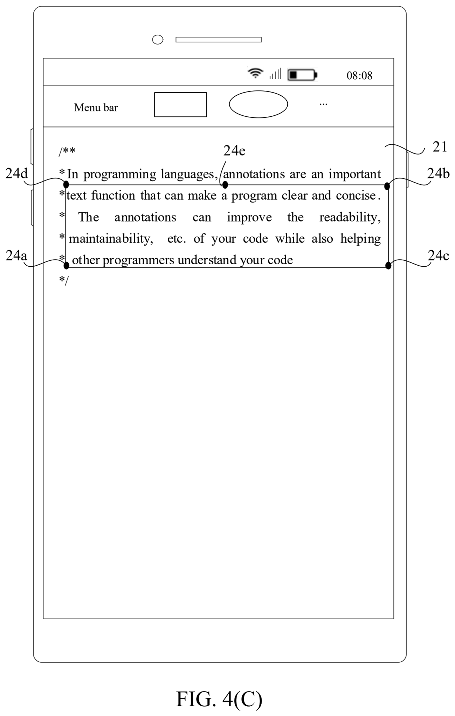

FIG. 4(C) is a schematic diagram of another example of an interface applied to a character selection control method according to an embodiment of this application. With reference to the foregoing FIG. 4(A), as shown in FIG. 4(C), if the user needs to remove "*" from all currently selected character rows, the user may drag the control point 24a rightward to a position below an area between "*" and a character adjacent to the right of "*", and the electronic device deselects "*" from characters in all character rows based on the position to which the control point 24a is dragged. In other words, an entire left area boundary of the character selection area is moved rightward by a distance of one character.

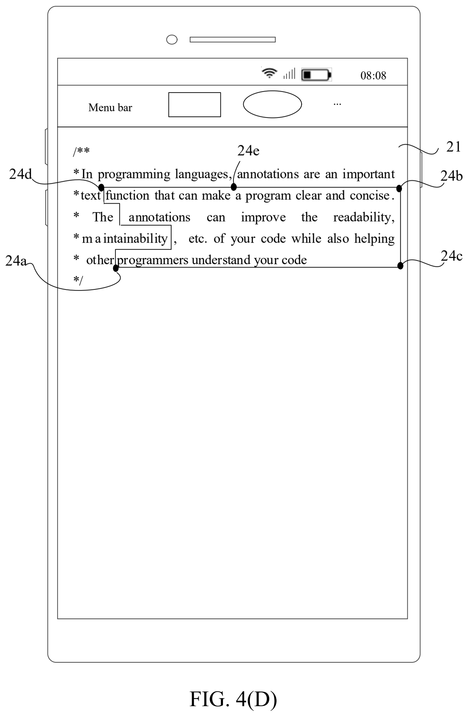

FIG. 4(D) is a schematic diagram of another example of an interface applied to a character selection control method according to an embodiment of this application. With reference to the foregoing FIG. 4(A), as shown in FIG. 4(D), if the user needs to remove the first two characters from currently selected character rows, the user may drag the control point 24a rightward to a position below an area between the 2nd character and the 3rd character. The electronic device selects the first two characters in characters in all character rows based on the position to which the control point 24a is dragged, and adjusts a start character in characters selected in each row to the 3rd character in each row. In other words, an entire left area boundary of the character selection area is moved rightward by a distance of two characters. In this way, based on an actual requirement, the user may drag the control point to deselect one or more characters starting in each row.

It should be noted that, in a case that the character selection area is determined, if the control point 24d is not touched by a finger, leftward/rightward movement of 24a changes selected start characters in all rows, a position of the control point 24d follows the movement, and the control point 24a is always at the lower left of the control point 24b, and is not moved to the right of or above the control point 24b.

It should be noted that, in this embodiment of this application, that the initial character in each row of characters is "*" is used as an example for description. In practice, the initial character in each row of characters may be a symbol, for example, "*" or "#", or may be a digit, for example, "1", or may be a Chinese character such as " 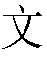 ". This is not limited in this embodiment of this application.

In some embodiments of this application, the character selection control apparatus may update, based on the updated display position of the first character selection control, the start character in the at least one row of characters other than the first row of characters in the N rows of characters selected in the character selection area.

For example, in a case that the character selection area is determined, if a display position of the fourth character selection control changes, a start character in each row of characters other than the first row of characters selected in the character selection area is updated based on the display position of the first character selection control.

For example, with reference to the foregoing FIG. 4(A), if the user needs to remove "*" from another row of characters other than the first row of characters in all currently selected character rows, the user may first touch and hold the control point 24d to trigger fixation of a start character in the first row of characters, and then drag the control point 24a rightward to a position below an area between "*" and a character "of" adjacent to the right of "*". The electronic device deselects "*" from a plurality of rows of characters other than the first row of characters in the selected characters based on the position to which the control point 24a is dragged. In other words, an entire left area boundary of the character selection area is moved rightward by a distance of one character.

In some embodiments of this application, the character selection control apparatus may update, based on the updated display position of the first character selection control, the quantity of character rows selected in the character selection area.

Optionally, the character selection control apparatus may update, based on the updated position of the first character selection control, an end character row selected in the character selection area, namely, the last row of characters.

For example, the character selection control apparatus updates the selected end character row in response to an input of moving the first character selection control upward or downward.

For example, with reference to the foregoing FIG. 4(a), after the user moves the control 24a upward by a distance of one row of characters, the character selection control apparatus deselects the selected last row of characters, that is, selects the second row of characters and the third row of characters. Alternatively, after the user moves the control 24a downward by a distance of two rows of characters, the character selection control apparatus selects two more rows of characters downward, that is, selects the second row of characters to the sixth row of characters.

According to the character selection control method provided in this embodiment of this application, the first character selection control is moved upward/downward, to quickly increase selected rows, and the first character selection control is moved leftward/rightward, to adjust together a start character in at least one row of characters selected in the character selection area. In this way, when a character that does not need to be selected by the user exists at start positions of a plurality of rows of characters, one or more characters that do not need to be selected at the start positions of the plurality of rows of characters may be filtered out at one time, to quickly obtain a character that needs to be selected, without performing, by the user, an operation row by row to select the character that needs to be selected, thereby greatly improving operation efficiency.

Optionally, in this embodiment of this application, the character selection area includes N rows of characters, and in a case that the character selection control is the second character selection control, the process of updating the character selection range of the character selection area in step S204 may be replaced with the following step S204a2:

Step S204a2: In a case that the second input is an input for adjusting a display position of the second character selection control, update a quantity of character rows selected in the character selection area or update an end character in at least one row of characters selected in the character selection area.

The at least one row of characters is the N rows of characters, or the at least one row of characters is at least one row of characters other than the first row of characters and the last row of characters in the N rows of characters, and N is an integer greater than 1.

In some embodiments of this application, the character selection control apparatus may update, based on the updated display position of the second character selection control, the quantity of character rows selected in the character selection area and the end character in the at least one row of characters other than the last row of characters in the N rows of characters selected in the character selection area.

It may be understood that the last row of characters is the tail row of characters.

Optionally, the character selection control apparatus may determine a target character in at least one row of characters in the N rows of characters based on the display position of the second character selection control, and use the target character in the at least one row of characters as an end character in the at least one row of characters selected in the character selection area.

For example, for one row of characters in the at least one row of characters, the target character may be one or more characters that are in the row of characters and that are located on the left of the display position of the second character selection control and have a smallest distance from the display position of the first control.

For example, the end character may include the last character in each row of characters in at least one row of characters selected in a target character area.

For example, in a case that the character selection area is determined, if a display position of the third character selection control changes, only an end character in each row of characters other than the tail row of characters selected in the character selection area is adjusted based on the display position of the second character selection control.

It should be noted that the third character selection control is a character selection control displayed at the vertex in the lower right corner of the target character area. For explanation of the third character selection control, refer to the foregoing description. Details are not described herein again.

For example, in response to an input of moving the second character selection control leftward or rightward, the character selection control apparatus updates end characters in all selected character rows or an end character in a character row other than the tail row in all selected character rows.

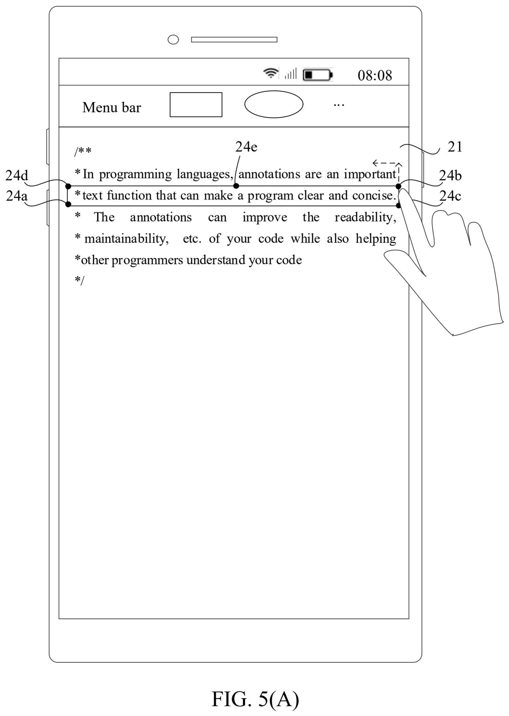

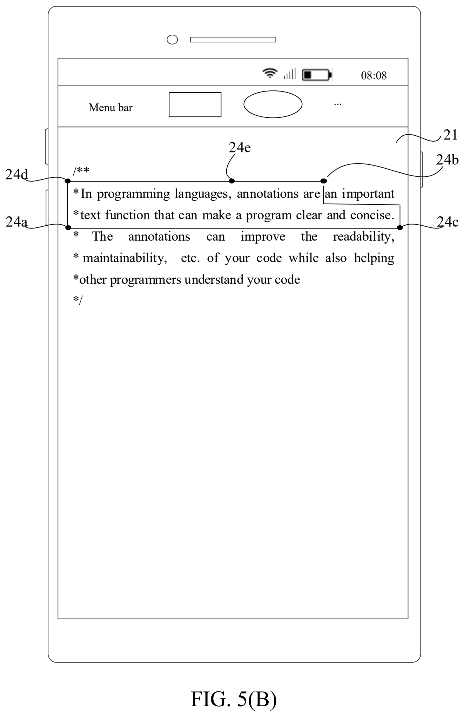

FIG. 5(A) and FIG. 5(B) are schematic diagrams of an example of an interface applied to a character selection control method according to an embodiment of this application. With reference to the foregoing FIG. 2(A) and FIG. 3, as shown in FIG. 5(A), if the user needs to select one more row of characters upward on a basis of currently selected characters, and remove the last two characters from another character row other than the last row of characters from the currently selected characters, after the user drags the control point 24b upward by a distance of one character, the user may first touch and hold the control point 24c to fix an end character selected in the tail row, and then drag the control point 24b leftward by a distance of two characters. As shown in FIG. 5(B), the electronic device deselects, based on a position to which the control point 24b is dragged, to the last two characters in a character row other than the last row of characters. In other words, a part of a right area boundary of the target character area is moved leftward by a distance of two characters.

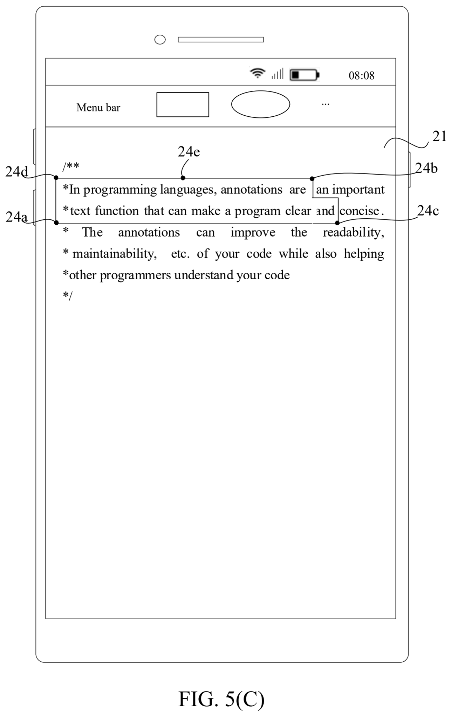

FIG. 5(C) is a schematic diagram of another example of an interface applied to a character selection control method according to an embodiment of this application. With reference to the foregoing FIG. 5(A), as shown in FIG. 5(C), if the user needs to remove the last two characters from all currently selected character rows, the user may drag the control point 24b leftward by a distance of two characters. The electronic device deselects the last two characters in characters in all character rows based on a position to which the control point 24b is dragged. In other words, an entire right area boundary of the target character area is moved leftward by a distance of two characters.

It should be noted that, in a case that the target character area is determined, if the control point 24c is not touched by a finger, leftward/rightward movement of 24b changes end characters selected in all rows, a position of the control point 24c follows the movement, and the control point 24b is always at the upper right of the control point 24a, and is not moved to the left of or below the control point 24a.

In some embodiments of this application, the character selection control apparatus may update, based on the updated display position of the first character selection control, the end characters in the N rows of characters selected in the character selection area.

For example, in a case that the character selection area is determined, if a display position of the third character selection control does not change, a start character in each row of characters selected in the character selection area is updated based on the display position of the second character selection control, that is, update the end characters in the N rows of characters.

For example, with reference to the foregoing FIG. 5(A), if the user needs to deselect the last character in each currently selected row of characters, the user may drag the control point 24b leftward by a distance of one character, and the character selection control apparatus updates the end characters in the selected three rows of characters to "more", "substitute", and "same" respectively.

In some embodiments of this application, the character selection control apparatus may update, based on the updated display position of the second character selection control, the end character in the at least one row of characters other than the last row of characters in the N rows of characters selected in the character selection area.

For example, in a case that the character selection area is determined, if a display position of the third character selection control changes, an end character in each row of characters other than the tail row of characters selected in the character selection area is updated based on the display position of the second character selection control.

For example, with reference to the foregoing FIG. 4(A), if the user needs to deselect the last characters in the second row of characters and the third row of characters that are currently selected, the user may first touch and hold the control point 24c, and then drag the control point 24b leftward by a distance of one character. The character selection control apparatus updates the end characters in the selected second row of characters and third row of characters to "substitute" and "same" respectively.

In some embodiments of this application, the character selection control apparatus may update, based on the updated display position of the second character selection control, the quantity of character rows selected in the character selection area.

Optionally, the character selection control apparatus may update, based on the updated position of the second character selection control, a start character row selected in the character selection area, namely, the first row of characters.

For example, the character selection control apparatus updates the selected start character row in response to an input of moving the second character selection control upward or downward.

For example, with reference to the foregoing FIG. 4(A), after the user moves the control 24b upward by a distance of one row of characters, the character selection control apparatus additionally selects the first row of characters, that is, selects the first row of characters to the third row of characters. Alternatively, after the user moves the control 24b downward by a distance of two rows of characters, the character selection control apparatus deselects two more rows of characters downward, that is, deselects the first row of characters and the second row of characters in the selected characters.

According to the character selection control method provided in this embodiment of this application, the second character selection control is moved upward/downward, to quickly increase selected rows, and the second character selection control is moved leftward/rightward, to adjust together an end character in at least one row of characters selected in the character selection area. In this way, when a character that does not need to be selected by the user exists at end positions of a plurality of rows of characters, one or more characters that do not need to be selected at the end positions of the plurality of rows of characters may be filtered out at one time, to quickly obtain a character that needs to be selected, without performing, by the user, an operation row by row to select the character that needs to be selected, thereby greatly improving operation efficiency.

Optionally, in this embodiment of this application, in a case that the character selection control is the third character selection control, the process of updating the character selection range of the character selection area in step S204 may be replaced with the following step S204a3:

Step S204a3: In a case that the second input is an input for adjusting a display position of the third character selection control, update an end character in the last row of characters selected in the character selection area.

For example, in response to an input of moving the third character selection control leftward or rightward, the character selection control apparatus adjusts a start character in the last row of characters in all selected character rows.

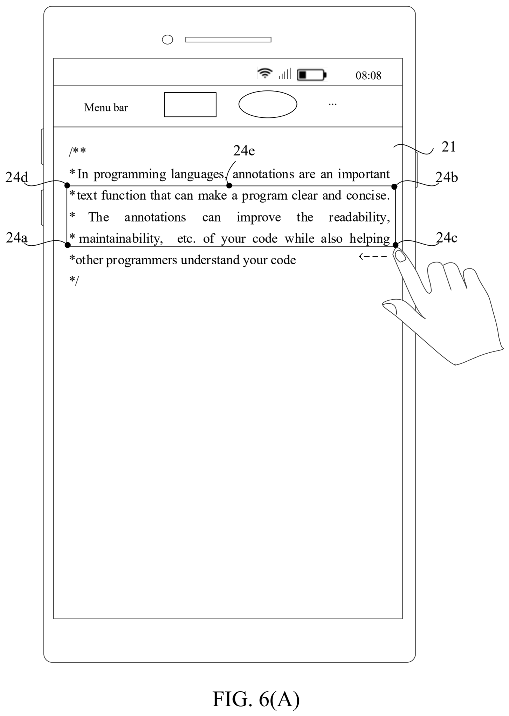

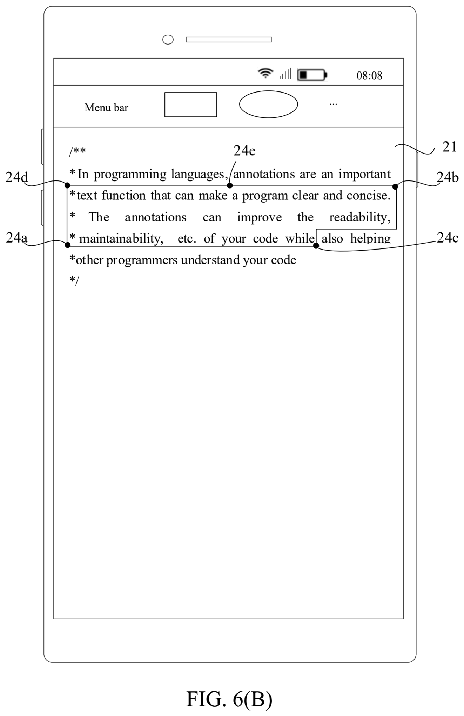

FIG. 6(A) and FIG. 6(B) are schematic diagrams of an example of an interface applied to a character selection control method according to an embodiment of this application. With reference to the foregoing FIG. 4(A), as shown in FIG. 6(A), if the user needs to adjust the end character in the last row of characters in currently selected characters, the user may drag the control point 24c leftward. As shown in FIG. 6(B), the electronic device adjusts the end character selected in the last row of characters from "timing" to ", " based on a position to which the control point 24a is dragged.

According to the character selection control method provided in this embodiment of this application, the end character in the selected last row of characters is adjusted by moving the third character selection control leftward/rightward, so that adjustment of the end character in the last row of characters can be separately controlled, thereby improving operation flexibility.

Optionally, in this embodiment of this application, in a case that the character selection control is the fourth character selection control, the process of updating the character selection range of the character selection area in step S204 may be replaced with the following step S204a4:

Step S204a4: In a case that the second input is an input for adjusting a display position of the fourth character selection control, update a start character in the first row of characters selected in the character selection area.

For example, in response to an input of moving the fourth character selection control leftward or rightward, the character selection control apparatus adjusts a start character in the initial row of characters in all selected character rows.

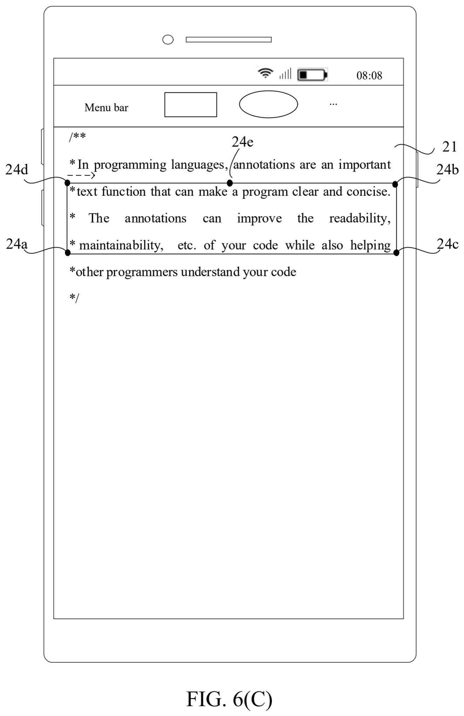

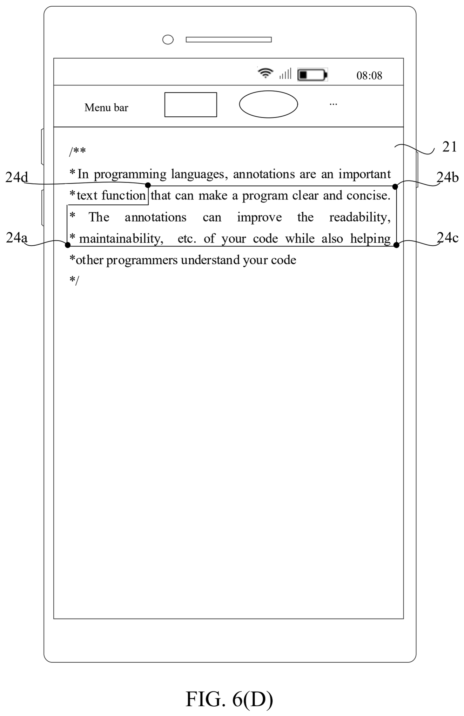

FIG. 6(C) and FIG. 6(D) are schematic diagrams of an example of an interface applied to a character selection control method according to an embodiment of this application. With reference to the foregoing FIG. 6(A), as shown in FIG. 6(C), if the user needs to adjust the start character in the initial row of characters in currently selected characters, the user may drag the control point 24d rightward. In FIG. 6(D), the electronic device adjusts the start character selected in the first row of characters from "*" to "can" based on a position to which the control point 24d is dragged.

According to the character selection control method provided in this embodiment of this application, the start character in the selected initial row of characters is adjusted by moving the fourth character selection control leftward/rightward, so that adjustment of the start character in the initial row of characters can be separately controlled, thereby improving operation flexibility.

Optionally, in this embodiment of this application, the character selection area includes N rows of characters, and an Xth row of characters in the N rows of characters corresponds to the fifth character selection control.

Optionally, the process of updating the character selection range of the character selection area in step 204 may include the following step A1:

Step A1: In a case that the second input is an input for adjusting a display position of the fifth character selection control, update a start character or an end character in a row of characters corresponding to the fifth character selection control among characters selected in the character selection area.

Optionally, one row of characters in the character selection area corresponds to one character selection control, and each character selection control is used to adjust a selection range of a row of characters corresponding to the character selection control.

Optionally, each character selection control may be displayed at a start position or an end position of a corresponding row of characters.

In some embodiments of this application, the character selection control may update, based on the updated display position of the fifth character selection control, the start character in the row of characters corresponding to the fifth character selection control.

For example, that the selected N rows of characters include five rows of characters is used as an example. It is assumed that the user needs to cancel display of the 1st character in the selected third row of characters and cancel display of the first two characters in the selected fourth row of characters. In this case, the user may move a character selection control corresponding to the third row of characters rightward by a distance of one character, to trigger the character selection control apparatus to deselect the 1st character in the third row of characters, and move a character selection control corresponding to the fourth row of characters rightward by a distance of two characters, to trigger the character selection control apparatus to deselect the first two characters in the fourth row of characters.

In some embodiments of this application, the character selection control may update, based on the updated display position of the fifth character selection control, the end character in the row of characters corresponding to the fifth character selection control.

For example, that the selected N rows of characters include five rows of characters is used as an example. It is assumed that the user needs to cancel display of the last character in the selected third row of characters and cancel display of the last two characters in the selected fourth row of characters. In this case, the user may move a character selection control corresponding to the third row of characters leftward by a distance of one character, to trigger the character selection control apparatus to deselect the last character in the third row of characters, and move a character selection control corresponding to the fourth row of characters leftward by a distance of two characters, to trigger the character selection control apparatus to deselect the last two characters in the fourth row of characters.

According to the character selection control method provided in this embodiment of this application, a character selection control corresponding to each row of characters is moved, to update a start character or an end character in each selected row of characters, so that a character selected in each row can be separately controlled, thereby improving operation flexibility.

Optionally, in this embodiment of this application, the M character selection controls may include a sixth character selection control.

Optionally, the foregoing step S203 of receiving the second input of the user for the character selection control in the M character selection controls may be implemented by using the following step S203a:
Step S203a: Receive the second input of the user for the sixth character selection control.

Optionally, with reference to the foregoing step S203a, the foregoing step S204 may include the following step S204b1 and step S204b2:

Step S204b1: In response to the second input, determine a first character in the character selection area based on a display position of the sixth character selection control.

Step S204b2: Deselect the first character from the character selection area.

For example, in response to a drag input for the sixth character selection control, the character selection control apparatus determines, as the first character, a character at the display position of the sixth character selection control, and deselects the first character.

Optionally, the first character includes at least one character.

For example, the first character may be a character closest to the sixth character selection control. Alternatively, the first character may include a plurality of characters whose distances from the sixth character selection control are less than a distance threshold.

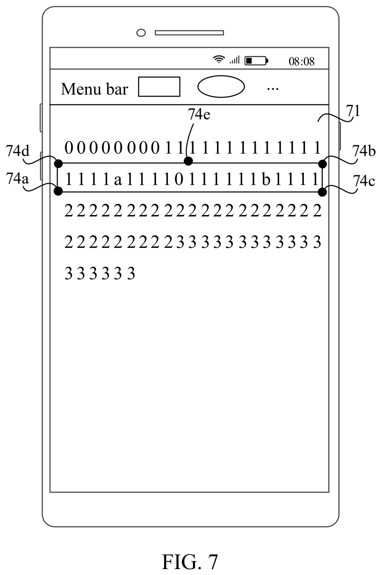

FIG. 7 is a schematic diagram of an example of an interface applied to a character selection control method according to an embodiment of this application. As shown in FIG. 7, the electronic device determines a character area based on the input trajectory of the sliding input of the user, displays a control point 74a at a vertex in a lower left corner of the character area, displays a control point 74b at a vertex in an upper right corner of the character area, displays a control point 74c at a vertex in a lower right corner of the character area, displays a control point 74d at a vertex in an upper left corner of the character area, and displays a control point 74e at a midpoint of an upper boundary of the character area. Further, if the user needs to deselect a character "0" in the character area, the user may move the control point 74e to a position of the character "0" that needs to be deselected, and the electronic device may deselect the character "0".

According to the character selection control method provided in this embodiment of this application, the sixth character selection control is moved, to deselect any character in the selected characters, so that non-consecutive characters can be selected, thereby greatly improving operation flexibility.

Further, optionally, in this embodiment of this application, before step S204b1 of determining a first character in the character selection area based on a display position of the character selection control, the character selection control method provided in this embodiment of this application further includes the following step B1 and step B2:
Step B1: Receive a third input for the sixth character selection control.

Step B2: In response to the third input, display a first sub-selection control at a first display position, and display a second sub-character selection control at a second display position.

The first display position and the second display position are determined based on an input end position of the third input.

Optionally, with reference to the foregoing step B1 and step B2, the process of determining the first character in the character selection area based on the display position of the character selection control in the foregoing step S204b1 may be implemented by using the following step S204c1:
S204c1: Determine a character between the first sub-character selection control and the second sub-character selection control as the first character.

Optionally, the third input may be any feasible input such as a touch input, a gesture input, and a voice input.

Optionally, the third input is used to adjust the display position of the sixth character selection control.

For example, the first display position may be a specific position or a random position within a character spacing on the left of a character at a display position of a target control, and the second display position may be a specific position or a random position within a character spacing on the right of the character at the display position of the target control. For example, the specific position may be a middle position of the character spacing, namely, a middle position between the character at the display position and a character adjacent to the character at the display position.

For example, the character at the display position of the target control may be a character closest to the display position of the target control.

For example, the first sub-character selection control and the second sub-character selection control each may be a circular control or a square control. This is not limited in this embodiment of this application.

For example, the first sub-character selection control and the second sub-character selection control each may be a control point.

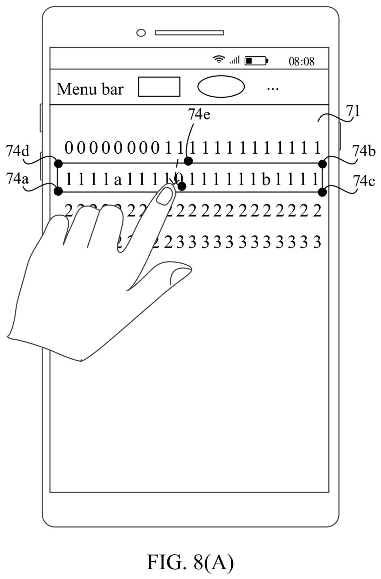

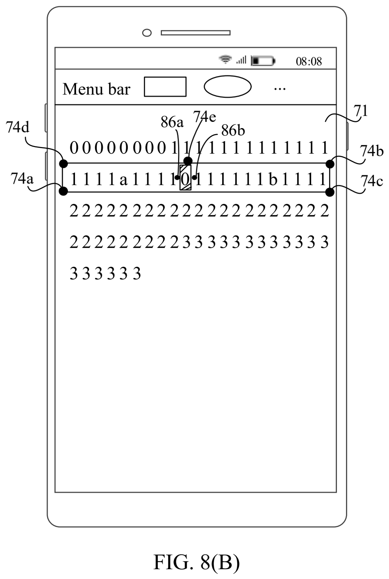

FIG. 8(A) and FIG. 8(B) are schematic diagrams of an example of an interface applied to a character selection control method according to an embodiment of this application. With reference to the foregoing FIG. 7, as shown in FIG. 8(A), in a case that the user needs to deselect the character "0" in the character area, the user moves the control point 74e to the position of the character "0" that needs to be deselected. As shown in FIG. 8(B), the electronic device displays a control point 86a at a middle position between the character "0" and a character "1" that is located on the left of the character and that is adjacent to the character, displays a control point 86b at a middle position between the character "0" and a character "1" that is located on the right of the character and that is adjacent to the character, and deselects the character "0".

According to the character selection control method provided in this embodiment of this application, the character selection control apparatus displays the first sub-character selection control and the second sub-character selection control based on a position to which the sixth character selection control is moved, and deselects a character between the first sub-character selection control and the second sub-character selection control, so that non-consecutive characters can be selected, thereby greatly improving operation flexibility.

Further, optionally, in this embodiment of this application, after the foregoing step B2, the character selection control method provided in this embodiment of this application further includes the following step B3 to step B5:
Step B3: Receive a fourth input for a target sub-character selection control.

Step B4: In response to the fourth input, adjust a display position of the target sub-character selection control based on an input end position corresponding to the fourth input.

The target sub-selection control includes at least one of the first sub-selection control and the second sub-selection control.

Step B5: Update the selected first character based on the adjusted display position of the target sub-selection control.

The target sub-character selection control includes at least one of the first sub-character selection control and the second sub-character selection control.

For example, the fourth input may include any one of the following: a touch input, a voice input, a gesture input, or another feasible input such as a button input of the user. This is not limited in this embodiment of this application.

Further, the touch input may be a tap input, a sliding input, a press input, or the like of the user. Further, the tap operation may be any quantity of tap operations. The sliding operation may be a sliding operation in any direction, such as upward sliding, downward sliding, leftward sliding, or rightward sliding. This is not limited in this embodiment of this application.

For example, the fourth input is a drag input for the target sub-character selection control.

For example, the character selection control apparatus may use the end position of the third input as a target display position of the target sub-character selection control, and adjust a current display position of the target sub-control to the target display position.

It may be understood that the character between the first sub-character selection control and the second sub-character selection control is a deselected character, and in a case that display positions of the first sub-character selection control and the second sub-character selection control change, a character in a deselected state also changes.

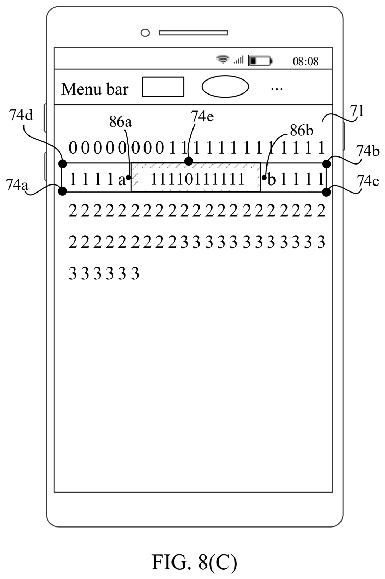

FIG. 8(C) is a schematic diagram of an another example of an interface applied to a character selection control method according to an embodiment of this application. With reference to the foregoing FIG. 8(A) and FIG. 8(B), when a quantity of characters that need to be deselected needs to be adjusted to deselect a character between a character "a" and a character "b", the user may drag the sub-control point 86a leftward to a middle position between the character "a" and a character "1", and drag the sub-control point 86b rightward to a middle position between a character "1" and the character "b", and trigger the electronic device to cancel display of all characters between the character "a" and the character "b".

It should be noted that, to intuitively reflect the deselected character, shaded filling is used to represent the deselected character in the accompanying drawings. For example, as shown in FIG. 8(A) and FIG. 8(B), a character in an area with shaded filling is the deselected character.

Further, optionally, the character selection control apparatus receives a sixth input of the user for the sixth character selection control, and displays a third sub-character selection control and a fourth sub-character selection control.

For example, the sixth input may be a drag input of the user for the sixth character selection control.

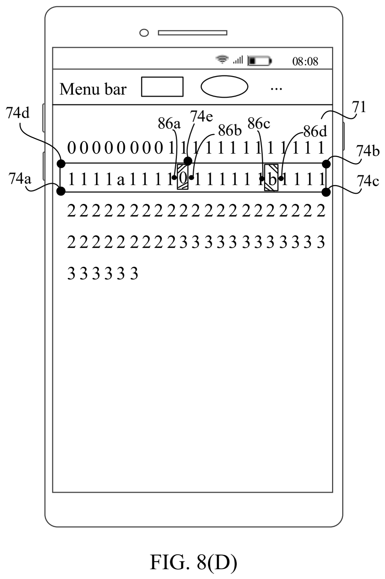

FIG. 8(D) is a schematic diagram of another example of an interface applied to a character selection control method according to an embodiment of this application. With reference to the foregoing FIG. 8(B), the user may continue to drag the control point 74e to a position of a character "b". As shown in FIG. 8(D), the electronic device displays a sub-control point 86c at a middle position between the character "b" and a character that is located on the left of the character and that is adjacent to the character, displays a sub-control point 86d at a middle position between the character "b" and a character that is located on the right of the character and that is adjacent to the character, and deselects the character "b".

It should be noted that a premise for displaying the target sub-control point is that there are remaining characters in the selected area. If the deselection control point S is dragged to a deselection area and released, no deselection control point is generated. Similarly, if the deselection control point is dragged to the 1st character or the last character and released, no deselection control point is generated either. If the deselection control point is dragged to another position, a deselection control point may be generated. This is similar to a display process of the sub-control point 86c and the sub-control point 86d.

According to the character selection control method provided in this embodiment of this application, after receiving a plurality of touch inputs of the user for the sixth character selection control, the character selection control apparatus may generate a plurality of groups of sub-character selection controls, and deselect a character between each group of sub-character selection controls, so that a plurality of pieces of non-consecutive character content can be selected from a segment of characters, thereby improving flexibility of character selection.

Further, optionally, in this embodiment of this application, after the foregoing step S204b2, the character selection control method provided in this embodiment of this application further includes the following step S204b3 and step S204b4:
Step S204b3: Insert a newline character between a second character and a third character.

Step S204b4: Merge the second character, the third character, and the newline character to obtain a target character.

The second character is a character between the initial character in the character selection area and the first sub-character selection control, and the third character is a character between the last character in the character selection area and the second sub-character selection control.

For example, the character selection control apparatus may merge the second character and the third character based on a character order of the second character and the third character in the first character. For example, if the second character is located before the third character, the third character is concatenated after the second character.

Further, the character selection control apparatus may convert the second character, the third character, and the newline character into character strings, and merge the second character, the third character, and the newline character through character string concatenation to obtain the target character.

For example, when merging the second character, the third character, and the newline character, the character selection control apparatus may determine, based on the display position of the first sub-character selection control or the second sub-character selection control, whether to insert a newline character between the second character and the third character.

For example, when the first sub-character selection control is at the bottom of a row, and two segments of characters before and after the first sub-character selection control are concatenated, a newline character is directly inserted between the two segments of characters. For example, when the second sub-character selection control is at the bottom of a row, and two segments of characters before and after the first sub-character selection control are concatenated, a newline character is also directly inserted between the two segments of characters.

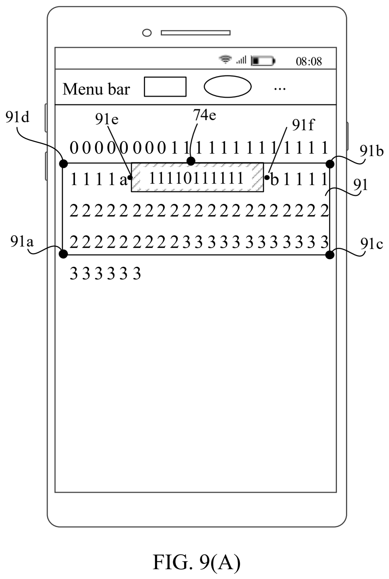

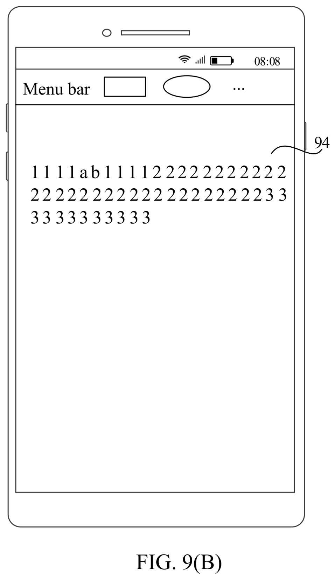

FIG. 9(A) is a schematic diagram of another example of an interface applied to a character selection control method according to an embodiment of this application. With reference to the foregoing embodiment, a character selection area 91 is displayed with control points 91a, 91b, 91c, and 91d, and a sub-control point 91e and a sub-control point 91f. In addition, characters between the sub-control point 91e and the sub-control point 91f in the character selection area 91 are in an unselected state. As shown in FIG. 9(B), a character 94 is obtained after the selected two segments of characters "1111a" and "b1111222222222222222222222222222222333333333333" are concatenated. Because both the sub-control point 91e and the sub-control point 91f are at middle positions in one row, there is no newline between the concatenated two segments of characters.

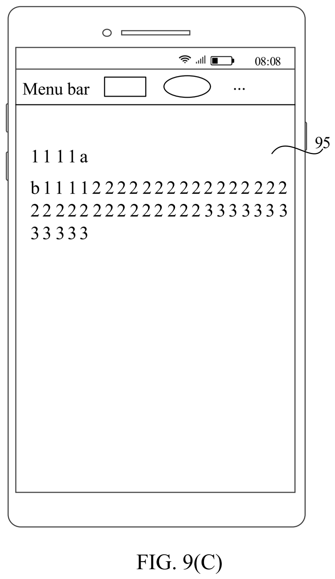

FIG. 9(C) is a schematic diagram of another example of an interface applied to a character selection control method according to an embodiment of this application. With reference to the foregoing FIG. 9(B), it is assumed that the sub-control point 91f is located at a bottom position of a row. As shown in FIG. 9(C), a character 95 is obtained after the two segments of characters are concatenated, and there is a newline between the character "1111a" and the character "b1111222222222222222222222222222222333333333333" in the character 95.

It should be noted that the character obtained through concatenation may not be displayed. To intuitively reflect that the character obtained through concatenation, the character is displayed in FIG. 9(B) and FIG. 9(C).

According to the character selection control method provided in this embodiment of this application, the character selection control apparatus may concatenate two non-consecutive segments of characters in the character selection area to obtain the target character. In addition, during concatenation, a newline character or no newline character may be added between the two segments of characters based on the display position of the sub-control point, thereby meeting different character selection requirements of the user.

Further, optionally, in this embodiment of this application, after the foregoing step B2, the character selection control method provided in this embodiment of this application further includes the following step C1 and step C2:
Step C1: Receive a fifth input for the first sub-character selection control and the second sub-character selection control.

Step C2: In response to the fifth input, restore selection of the character between the first sub-character selection control and the second sub-character selection control, and cancel display of the first sub-character selection control and the second sub-character selection control.

For example, the fifth input may include any one of the following: a touch input, a voice input, a gesture input, or another feasible input such as a button input of the user. This is not limited in this embodiment of this application.

Further, the touch input may be a tap input, a sliding input, a press input, or the like of the user. Further, the tap operation may be any quantity of tap operations. The sliding operation may be a sliding operation in any direction, such as upward sliding, downward sliding, leftward sliding, or rightward sliding. This is not limited in this embodiment of this application.

For example, the fifth input may be an input of dragging the first sub-character selection control to the second sub-character selection control, or the fifth input may be an input of dragging the second sub-character selection control to the first sub-control control.

For example, with reference to the foregoing FIG. 8(D), the electronic device displays a sub-control point 86a, a sub-control point 86b, a sub-control point 86c, and a sub-control point 86d in the character selection area. The user drags the sub-control point 86c to a position of the sub-control point 86d, so that the sub-control point 86c and the sub-control point 86d are at least partially overlapped. The electronic device cancels display of the sub-control point 86c and the sub-control point 86d, and restores a character "b" between the sub-control point 86c and the sub-control point 86d to a selected state, as shown in FIG. 8(B).

According to the character selection control method provided in this embodiment of this application, after receiving the fourth input of the user for the first sub-character selection control and the second sub-character selection control, the character selection control apparatus cancels display of the first sub-character selection control and the second sub-character selection control, and restores the character between the first sub-character selection control and the second sub-character selection control to a selected state, so that the user can increase or decrease a quantity of sub-character selection control groups based on an actual requirement. Therefore, a character that needs to be deselected in the character selection area can be conveniently and flexibly deselected by using the sub-character selection control group, thereby improving flexibility of selecting a segment of non-consecutive characters.

Optionally, in this embodiment of this application, in a case that a character selected in the character selection area is determined, the character selection control apparatus may receive a seventh input of the user for a first function option, and execute a function corresponding to the first function option.

For example, the first function option may be a copy option or a screenshot option.

For example, after a character is selected, the user may tap the "copy option" to trigger the character selection control apparatus to copy the selected character.

For example, after a character is selected, the user may tap the "screenshot option" to trigger the character selection control apparatus to take a screenshot of the selected character.

Further, when taking a screenshot of the selected character, the character selection control apparatus may take a screenshot of the entire character to obtain a first screenshot, then remove an unselected character in the first screenshot by using an image processing algorithm, and retain a background of the unselected character, to obtain a screenshot that includes only the selected character.

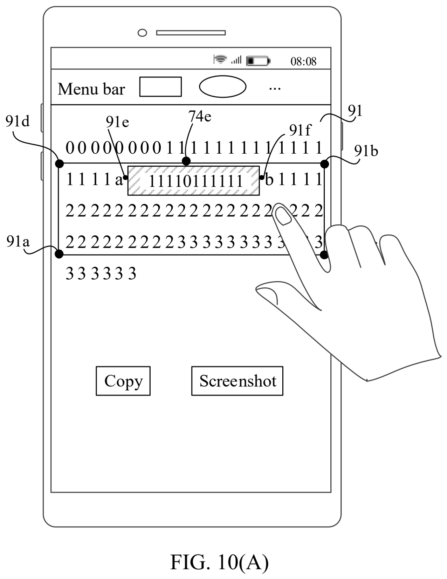

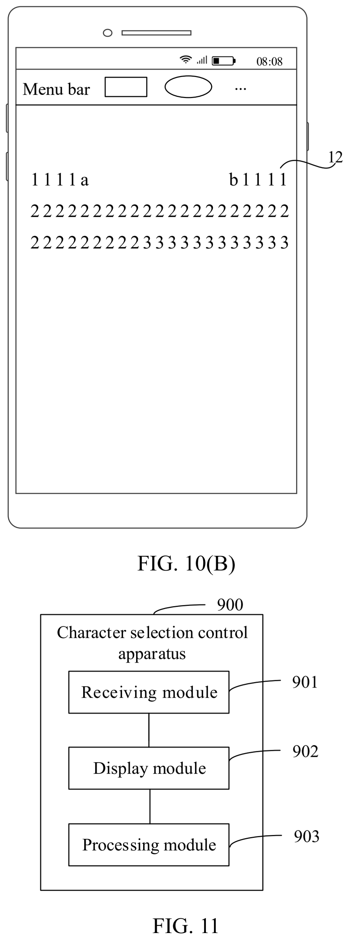

FIG. 10(A) is a schematic diagram of another example of an interface applied to a character selection control method according to an embodiment of this application. With reference to the foregoing FIG. 9(A), as shown in FIG. 10(A), after the user touches and holds the selected character area, the electronic device displays the "copy" option and the "screenshot" option. After the user taps the "copy" option, the copied character "1111ab1111222222222222222222222222222222333333333333" that does not include an unselected character between a character "a" and a character "b" in the character area is obtained. After the user taps the "screenshot" option, as shown in FIG. 10(B), the electronic device takes a screenshot of the character selection area to obtain a screenshot 12 that does not include the unselected character between the character "a" and the character "b" and that includes only the selected character.

According to the character selection control method provided in this embodiment of this application, the character selection control apparatus receives an input of the user for the copy option, to copy a selected character, or receives an input of the user for the screenshot option, to obtain a screenshot that includes only a selected character, so as to obtain copied content or a screenshot that meets a user requirement.

The character selection control method provided in the embodiments of this application may be performed by a character selection control apparatus. In the embodiments of this application, the character selection control apparatus provided in the embodiments of this application is described by using an example in which the character selection control apparatus performs the character selection control method.

FIG. 11 is a schematic diagram of a structure of a character selection control apparatus according to an embodiment of this application. As shown in FIG. 11, the character selection control apparatus 900 may include a receiving module 901, a display module 902, and a processing module 903. The receiving module 901 is configured to receive a first input. The display module 902 is configured to display a character selection area in response to the first input received by the receiving module 901. The receiving module 901 is further configured to receive a second input for adjusting a character selection control in the character selection area. The processing module 903 is configured to update a character selection range of the character selection area in response to the second input received by the receiving module 901.

Optionally, in this embodiment of this application, the character selection area includes N rows of characters. The character selection control includes a first character selection control. The processing module is specifically configured to: in a case that the second input is an input for adjusting a display position of the first character selection control, update a quantity of character rows selected in the character selection area or update a start character in at least one row of characters selected in the character selection area. The at least one row of characters is the N rows of characters, or the at least one row of characters includes characters other than the first row of characters in the N rows of characters, and N is an integer greater than 1.

Optionally, in this embodiment of this application, the character selection area includes N rows of characters. The character selection control is a second character selection control. The processing module is specifically configured to: in a case that the second input is an input for adjusting a display position of the second character selection control, update a quantity of character rows selected in the character selection area or update an end character in at least one row of characters selected in the character selection area.

The at least one row of characters is the N rows of characters, or the at least one row of characters is at least one row of characters other than the first row of characters and the last row of characters in the N rows of characters, and N is an integer greater than 1.

Optionally, in this embodiment of this application, the at least one character selection control includes a third character selection control.

The processing module is specifically configured to: in a case that the second input is an input for adjusting a display position of the third character selection control, update an end character in the last row of characters selected in the character selection area.

Optionally, in this embodiment of this application, the character selection control includes a fourth character selection control. The processing module is specifically configured to: in a case that the second input is an input for adjusting a display position of the fourth character selection control, update a start character in the first row of characters selected in the character selection area.

Optionally, in this embodiment of this application, the character selection area includes N rows of characters, and an Xth row of characters in the N rows of characters corresponds to a fifth character selection control. The processing module is specifically configured to: in a case that the second input is an input for adjusting a display position of the fifth character selection control, update a start character or an end character in a row of characters corresponding to the character selection control among characters selected in the character selection area.

Optionally, in this embodiment of this application, the character selection control includes a sixth character selection control. The receiving module is specifically configured to receive the second input of a user for adjusting a display position of the sixth character selection control. The processing module is specifically configured to: in response to the second input received by the receiving module, determine a first character in the character selection area based on the display position of the sixth character selection control, and deselect the first character from characters selected in the character selection area.

Optionally, in this embodiment of this application, the receiving module is further configured to receive a third input for the fifth character selection control. The display module is further configured to: in response to the third input received by the receiving module, display a first sub-selection control at a first position, and display a second sub-selection control at a second position, where the first display position and the second display position are determined based on an input end position of the third input. The processing module is specifically configured to determine a character between the first sub-selection control and the second sub-selection control as the first character.

Optionally, in this embodiment of this application, the receiving module is further configured to receive a fourth input for a target sub-selection control. The processing module is further configured to: in response to the fourth input received by the receiving module, adjust a display position of the target sub-selection control based on an input end position of the fourth input, where the target sub-selection control includes at least one of the first sub-selection control and the second sub-selection control. The processing module is specifically configured to update the selected first character based on the adjusted display position of the target sub-selection control.

Optionally, in this embodiment of this application, the processing module is further configured to merge, into a target character, a second character and a third character that are selected in the character selection area, where the second character is a character between the initial character in the character selection area and the first sub-selection control, and the third character is a character between the last character in the character selection area and the second sub-selection control.

Optionally, in this embodiment of this application, the processing module is specifically configured to insert a newline character between the second character and the third character. The processing module is specifically configured to merge the second character, the third character, and the newline character to obtain the target character.

Optionally, in this embodiment of this application, the receiving module is further configured to receive a fifth input for the first sub-selection control and the second sub-selection control. The processing module is further configured to: restore selection of the character between the first sub-selection control and the second sub-selection control, and cancel display of the first sub-selection control and the second sub-selection control.

According to the character selection control apparatus provided in this embodiment of this application, the character selection control apparatus receives the first input; displays the character selection area, where the character selection area is used to select at least one character; receives the second input for the display position of the character selection control in the character selection area; and updates the character selection range of the character selection area. In this method, when the user needs to select specific character content in the character area, the user may first trigger display of the character selection area used to select a character, and then trigger, by moving the character selection control in the character selection area, the character selection control apparatus to update the character selection range of the character selection area, so that the user can conveniently and flexibly adjust, based on an actual character selection requirement, the character selected in the character selection area. In this way, a character that needs to be selected can be conveniently and flexibly selected from a plurality of rows of characters, to quickly obtain a character that meet a user requirement.

The character selection control apparatus in this embodiment of this application may be an electronic device, or may be a component such as an integrated circuit or a chip in an electronic device. The electronic device may be a terminal, or may be another device different from a terminal. For example, the electronic device may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook or a personal digital assistant (personal digital assistant, PDA), or the like; or may be a server, a network attached storage (Network Attached Storage, NAS), a personal computer (personal computer, PC), a television (television, TV), a teller machine, a self-service machine, or the like. This is not specifically limited in this embodiment of this application.

The character selection control apparatus in this embodiment of this application may be an apparatus with an operating system. The operating system may be an Android (Android) operating system, may be an iOS operating system, or may be another possible operating system. This is not specifically limited in this embodiment of this application.

The character selection control apparatus provided in this embodiment of this application can implement the processes implemented in the method embodiments in FIG. 1 to FIG. 10(B). To avoid repetition, details are not described herein again.

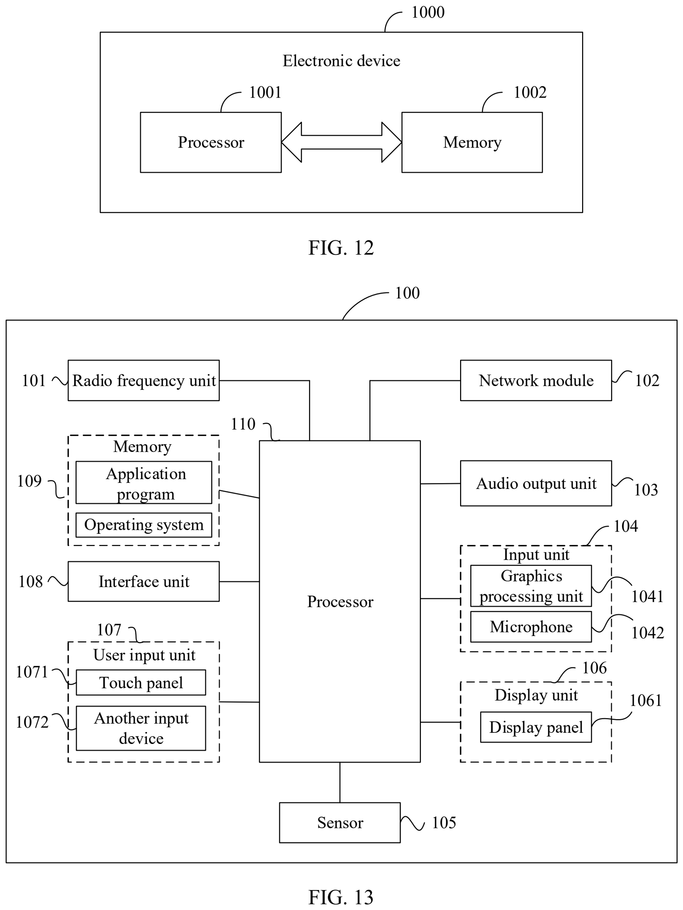

Optionally, as shown in FIG. 12, an embodiment of this application further provides an electronic device 1000, including a processor 1001 and a memory 1002. The memory 1002 stores a program or instructions executable on the processor 1001. The program or the instructions are executed by the processor M01 to implement the steps in the character selection control method embodiment, and same technical effects can be achieved. To avoid repetition, details are not described herein again.

It should be noted that the electronic device in this embodiment of this application includes the foregoing mobile electronic device and a non-mobile electronic device.

FIG. 13 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include a power supply (for example, a battery) that supplies power to each component, and the power supply may be logically connected to the processor 110 by using a power management system, to implement functions such as charging management, discharging management, and power consumption management by using the power management system. A structure of the electronic device shown in FIG. 13 constitutes no limitation on the electronic device. The electronic device may include more or fewer components than those shown in the figure, or combine some components, or have different component arrangements. Details are not described herein again.

The user input unit 107 is configured to receive a first input. The display unit 106 is configured to display a character selection area in response to the first input received by the user input unit 107. The user input unit 107 is further configured to receive a second input for adjusting a character selection control in the character selection area. The processing module 903 is configured to update a character selection range of the character selection area in response to the second input received by the user input unit 107.

Optionally, in this embodiment of this application, the character selection area includes N rows of characters. The character selection control includes a first character selection control. The processor 110 is specifically configured to: in a case that the second input is an input for adjusting a display position of the first character selection control, update a quantity of character rows selected in the character selection area or update a start character in at least one row of characters selected in the character selection area. The at least one row of characters is the N rows of characters, or the at least one row of characters includes characters other than the first row of characters in the N rows of characters, and N is an integer greater than 1.

Optionally, in this embodiment of this application, the character selection area includes N rows of characters. The character selection control is a second character selection control. The processor 110 is specifically configured to: in a case that the second input is an input for adjusting a display position of the second character selection control, update a quantity of character rows selected in the character selection area or update an end character in at least one row of characters selected in the character selection area.

The at least one row of characters is the N rows of characters, or the at least one row of characters is at least one row of characters other than the first row of characters and the last row of characters in the N rows of characters, and N is an integer greater than 1.

Optionally, in this embodiment of this application, the at least one character selection control includes a third character selection control.

The processor 110 is specifically configured to: in a case that the second input is an input for adjusting a display position of the third character selection control, update an end character in the last row of characters selected in the character selection area.

Optionally, in this embodiment of this application, the character selection control includes a fourth character selection control. The processor 110 is specifically configured to: in a case that the second input is an input for adjusting a display position of the fourth character selection control, update a start character in the first row of characters selected in the character selection area.

Optionally, in this embodiment of this application, the character selection area includes N rows of characters, and an Xth row of characters in the N rows of characters corresponds to a fifth character selection control. The processor 110 is specifically configured to: in a case that the second input is an input for adjusting a display position of the fifth character selection control, update a start character or an end character in a row of characters corresponding to the character selection control among characters selected in the character selection area.

Optionally, in this embodiment of this application, the character selection control includes a sixth character selection control. The user input unit 107 is specifically configured to receive the second input of a user for adjusting a display position of the sixth character selection control. The processor 110 is specifically configured to: in response to the second input received by the user input unit 107, determine a first character in the character selection area based on the display position of the sixth character selection control, and deselect the first character from characters selected in the character selection area.

Optionally, in this embodiment of this application, the user input unit 107 is further configured to receive a third input for the fifth character selection control. The display unit 106 is further configured to: in response to the third input received by the user input unit 107, display a first sub-selection control at a first position, and display a second sub-selection control at a second position, where the first display position and the second display position are determined based on an input end position of the third input. The processor 110 is specifically configured to determine a character between the first sub-selection control and the second sub-selection control as the first character.

Optionally, in this embodiment of this application, the user input unit 107 is further configured to receive a fourth input for a target sub-selection control. The processor 110 is further configured to: in response to the fourth input received by the user input unit 107, adjust a display position of the target sub-selection control based on an input end position of the fourth input, where the target sub-selection control includes at least one of the first sub-selection control and the second sub-selection control. The processor 110 is specifically configured to update the selected first character based on the adjusted display position of the target sub-selection control.

Optionally, in this embodiment of this application, the processor 110 is further configured to merge, into a target character, a second character and a third character that are selected in the character selection area, where the second character is a character between the initial character in the character selection area and the first sub-selection control, and the third character is a character between the last character in the character selection area and the second sub-selection control.

Optionally, in this embodiment of this application, the processor 110 is specifically configured to insert a newline character between the second character and the third character. The processor 110 is specifically configured to merge the second character, the third character, and the newline character to obtain the target character.

Optionally, in this embodiment of this application, the user input unit 107 is further configured to receive a fifth input for the first sub-selection control and the second sub-selection control. The processor 110 is further configured to: restore selection of the character between the first sub-selection control and the second sub-selection control, and cancel display of the first sub-selection control and the second sub-selection control.

According to the electronic device provided in this embodiment of this application, the electronic device receives the first input; displays the character selection area, where the character selection area is used to select at least one character; receives the second input for the display position of the character selection control in the character selection area; and updates the character selection range of the character selection area. In this method, when the user needs to select specific character content in the character area, the user may first trigger display of the character selection area used to select a character, and then trigger, by moving the character selection control in the character selection area, the electronic device to update the character selection range of the character selection area, so that the user can conveniently and flexibly adjust, based on an actual character selection requirement, the character selected in the character selection area. In this way, a character that needs to be selected can be conveniently and flexibly selected from a plurality of rows of characters, to quickly obtain a character that meet a user requirement.

It should be understood that in this embodiment of this application, the input unit 104 may include a graphics processing unit (Graphics Processing Unit, GPU) 1041 and a microphone 1042. The graphics processing unit 1041 processes image data of a still picture or a video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 may include at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a function key (such as a volume control key or an on/off key), a trackball, a mouse, and a joystick. Details are not described herein.

The memory 109 may be configured to store a software program and various data. The memory 109 may mainly include a first storage area for storing a program or instructions and a second storage area for storing data, where the first storage area may store an operating system, an application program or instructions required by at least one function (such as a sound play function or an image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 in this embodiment of this application includes but is not limited to these memories and any other suitable type of memory.

The processor 110 may include one or more processing units. Optionally, the processor 110 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 110.

An embodiment of this application further provides a readable storage medium. The readable storage medium stores a program or instructions. When the program or the instructions are executed by a processor, the processes in the foregoing character selection control method embodiments can be implemented, and same technical effects can be achieved. To avoid repetition, details are not described herein again.

The processor is a processor in the electronic device in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the processes in the foregoing character selection control method embodiment, and same technical effects can be achieved. To avoid repetition, details are not described herein again.

It should be understood that, the chip mentioned in this embodiment of this application may also be referred to as a system-level chip, a system chip, a chip system, or a system on chip.

An embodiment of this application provides a computer program product. The program product is stored in a storage medium. The program product is executed by at least one processor to implement the processes in the foregoing character selection control method embodiment, and same technical effects can be achieved. To avoid repetition, details are not described herein again.

It should be noted that in this specification, the term "include", "comprise", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples can be combined in other examples.

According to the foregoing descriptions of the implementations, a person skilled in the art can clearly understand that the method in the foregoing embodiments can be implemented by software and a necessary general-purpose hardware platform, or certainly can be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other manners without departing from principles of this application and the protection scope of the claims, and all such manners fall within the protection scope of this application.

## Claims

1. A character selection control method, wherein the method comprises:
receiving a first input;
displaying a character selection area in response to the first input, wherein the character selection area is used to select at least one character;
receiving a second input for adjusting a display position of a character selection control in the character selection area; and
updating a character selection range of the character selection area in response to the second input.

2. The method according to claim 1, wherein the character selection area comprises N rows of characters, and the character selection control comprises a first character selection control; and
the updating a character selection range of the character selection area comprises:
in a case that the second input is an input for adjusting a display position of the first character selection control, updating a quantity of character rows selected in the character selection area or updating a start character in at least one row of characters selected in the character selection area, wherein
the at least one row of characters is the N rows of characters, or the at least one row of characters comprises characters other than the first row of characters in the N rows of characters, and N is an integer greater than 1.

3. The method according to claim 1, wherein the character selection area comprises N rows of characters, and the character selection control comprises a second character selection control; and
the updating a character selection range of the character selection area comprises:
in a case that the second input is an input for adjusting a display position of the second character selection control, updating a quantity of character rows selected in the character selection area or updating an end character in at least one row of characters selected in the character selection area, wherein
the at least one row of characters is the N rows of characters, or the at least one row of characters is at least one row of characters other than the first row of characters and the last row of characters in the N rows of characters, and N is an integer greater than 1.

4. The method according to claim 1, wherein the character selection control comprises a third character selection control; and
the updating a character selection range of the character selection area comprises:
in a case that the second input is an input for adjusting a display position of the third character selection control, updating an end character in the last row of characters selected in the character selection area.

5. The method according to claim 1, wherein the character selection control comprises a fourth character selection control; and
the updating a character selection range of the character selection area comprises:
in a case that the second input is an input for adjusting a display position of the fourth character selection control, updating a start character in the first row of characters selected in the character selection area.

6. The method according to claim 1, wherein the character selection area comprises N rows of characters, and an Xth row of characters in the N rows of characters corresponds to a fifth character selection control; and
the updating a character selection range of the character selection area comprises:
in a case that the second input is an input for adjusting a display position of the fifth character selection control, updating a start character or an end character in a row of characters corresponding to the fifth character selection control among characters selected in the character selection area.

7. The method according to claim 1, wherein the character selection control comprises a sixth character selection control, and the receiving a second input for adjusting a display position of a character selection control in the character selection area comprises:
receiving the second input of a user for adjusting a display position of the sixth character selection control; and
the updating a character selection range of the character selection area in response to the second input comprises:
in response to the second input, determining a first character in the character selection area based on the display position of the sixth character selection control; and
deselecting the first character from characters selected in the character selection area.

8. The method according to claim 7, wherein before the determining a first character in the character selection area based on the display position of the sixth character selection control, the method further comprises:
receiving a third input for the sixth character selection control; and
in response to the third input, displaying a first sub-selection control at a first display position, and displaying a second sub-selection control at a second display position, wherein the first display position and the second display position are determined based on an input end position of the third input; and
the determining a first character in the character selection area based on the display position of the sixth character selection control comprises:
determining a character between the first sub-selection control and the second sub-selection control as the first character.

9. The method according to claim 8, wherein after the displaying a first sub-selection control at a first display position, and displaying a second sub-selection control at a second display position, the method further comprises:
receiving a fourth input for a target sub-selection control;
in response to the fourth input, adjusting a display position of the target sub-selection control based on an input end position of the fourth input, wherein the target sub-selection control comprises at least one of the first sub-selection control and the second sub-selection control; and
updating a selected first character based on the adjusted display position of the target sub-selection control.

10. The method according to claim 8 or 9, wherein after the deselecting the first character from characters selected in the character selection area, the method further comprises:
merging, into a target character, a second character and a third character that are selected in the character selection area, wherein
the second character is a character between an initial character in the character selection area and the first sub-selection control, and the third character is a character between the last character in the character selection area and the second sub-selection control.

11. The method according to claim 10, wherein the merging, into a target character, a second character and a third character that are selected in the character selection area comprises:
inserting a newline character between the second character and the third character; and
merging the second character, the third character, and the newline character to obtain the target character.

12. The method according to claim 8 or 9, wherein after the displaying a first sub-selection control at a first display position, and displaying a second sub-selection control at a second display position, the method further comprises:
receiving a fifth input for the first sub-selection control and the second sub-selection control; and
in response to the fifth input, restoring selection of the character between the first sub-selection control and the second sub-selection control, and cancelling display of the first sub-selection control and the second sub-selection control.

13. A character selection control apparatus, wherein the apparatus comprises a receiving module, a display module, and a processing module, wherein
the receiving module is configured to receive a first input;
the display module is configured to display a character selection area in response to the first input received by the receiving module;
the receiving module is further configured to receive a second input for adjusting a display position of a character selection control in the character selection area; and
the processing module is configured to update a character selection range of the character selection area in response to the second input received by the receiving module.

14. The apparatus according to claim 13, wherein the character selection area comprises N rows of characters, and the character selection control comprises a first character selection control; and
the processing module is specifically configured to: in a case that the second input is an input for adjusting a display position of the first character selection control, update a quantity of character rows selected in the character selection area or update a start character in at least one row of characters selected in the character selection area, wherein
the at least one row of characters is the N rows of characters, or the at least one row of characters comprises characters other than the first row of characters in the N rows of characters, and N is an integer greater than 1.

15. The apparatus according to claim 13, wherein the character selection area comprises N rows of characters, and the character selection control comprises a second character selection control; and
the processing module is specifically configured to: in a case that the second input is an input for adjusting a display position of the second character selection control, update a quantity of character rows selected in the character selection area or update an end character in at least one row of characters selected in the character selection area, wherein
the at least one row of characters is the N rows of characters, or the at least one row of characters is at least one row of characters other than the first row of characters and the last row of characters in the N rows of characters, and N is an integer greater than 1.

16. The apparatus according to claim 13, wherein the character selection control comprises a third character selection control; and
the processing module is specifically configured to: in a case that the second input is an input for adjusting a display position of the third character selection control, update an end character in the last row of characters selected in the character selection area.

17. An electronic device, comprising a processor and a memory, wherein the memory stores a program or instructions executable on the processor, and when the program or the instructions are executed by the processor, the steps of the character selection control method according to any one of claims 1 to 12 are implemented.

18. A readable storage medium, wherein the readable storage medium stores a program or instructions, and when the program or the instructions are executed by a processor, the steps of the character selection control method according to any one of claims 1 to 12 are implemented.

19. A chip, wherein the chip comprises a processor and a communication interface, the communication interface is coupled to the processor, and the processor is configured to run a program or instructions to implement the method according to any one of claims 1 to 12.

20. A computer program product, wherein the program product is stored in a storage medium, and the program product is executed by at least one processor to implement the steps of the character selection control method according to any one of claims 1 to 12.
